# EUROPÄISCHE PATENTSCHRIFT

(11) **EP 2 783 851 B1**
(45) Veröffentlichungstag und Bekanntmachung des Hinweises auf die Patenterteilung: **16.08.2017**
(21) Anmeldenummer: 14157844.3
(22) Anmeldetag: 05.03.2014
(51) Int. Cl.: B32B 27/32, B32B 27/34, B32B 1/08

(54) **Mehrschichtrohr mit Polyamidschicht**
Multilayer pipe with polyamide layer
Tube multicouches avec couche en polyamide

(30) Priorität: 28.03.2013 DE 102013205616
(43) Veröffentlichungstag der Anmeldung: 01.10.2014
(73) Patentinhaber: Evonik Degussa GmbH, 45128 Essen (DE)
(72) Erfinder: Dowe, Andreas, 46325 Borken (DE); Franosch, Juergen, 45770 Marl (DE); Berger, Jan, 44141 Dortmund (DE); Behrens, Claudia, 58313 Herdecke (DE)

(56) Entgegenhaltungen:
- WO-A1-2011/128175
- US-B1- 6 455 118

## Beschreibung

Die Erfindung betrifft Rohre, die eine äußere Verstärkungsschicht sowie eine innenliegende mehrschichtige Auskleidung enthalten, welche eine Polyamidschicht sowie eine Funktionsschicht aus einem anderen Polymer enthält. Diese Rohre werden insbesondere zur Förderung bzw. zum Transport von Rohöl oder Erdgas oder zum Transport von überkritischem CO₂ eingesetzt, vor allem unter Bedingungen, bei denen mit relativ schnellen Druckänderungen gerechnet werden muss. Derartige Druckänderungen sind in der Öl- und Gasindustrie unter dem Begriff "Rapid Gas Decompression" (RGD) ein bekanntes Phänomen.

So muss beispielsweise bei der tertiären Erdölförderung mit solchen Druckänderungen umgegangen werden. Tertiäre Ölfördermethoden verwenden überkritisches CO₂ als Lösemittel für Restöl, wobei dessen Viskosität verringert und die Extraktion aus den ölführenden Schichten erleichtert wird. Für CO₂ liegt die kritische Temperatur bei 31 °C und der kritische Druck bei 73,8 bar. In der Praxis werden deutlich höhere Drücke verwendet, da die Lösefähigkeit von überkritischem CO₂ mit dem Druck ansteigt. Typische Drücke liegen im Bereich von 75 bis 220 bar, wobei die Temperatur bis zu 150 °C betragen kann.

Die Rohre, die überkritisches CO₂ transportieren, sind häufig mit einem polymeren Inliner ausgerüstet, um die üblicherweise metallische Struktur vor Korrosion zu schützen. Bei Transportrohren besteht der Liner üblicherweise aus Polyethylen; er kann aber auch beispielsweise aus einem Polyamid oder aus PVDF bestehen.

Darüber hinaus können schnelle Druckänderungen während des Betriebs von Rohölleitungen sowie von Gasleitungen auftreten, beispielsweise dann, wenn die Leitung zwecks Wartungsarbeiten entspannt wird und dabei eine rasche Druckminderung auftritt. Auch bei einer Notfallabschaltung kann in solchen Förder-, Sammel- oder Transportleitungen eine rasche Druckminderung auftreten.

Inliner aus Polyethylen quellen im Kontakt mit Rohöl oder Erdgas, insbesondere bei den verwendeten Drücken und Temperaturen, stark, was zu unerwünschten Längenänderungen führt. Dieses Phänomen kann verringert werden, wenn die Polyethylenschicht nach innen, also zum Medium hin, durch eine Polyamidschicht geschützt ist. Bei höheren Einsatztemperaturen wird als Inlinermaterial häufig Polyamid verwendet; diese Schicht wird bevorzugt nach innen hin von einer Polyolefinschicht, einer Fluorpolymerschicht oder einer Kombination von Polyolefinschicht und Fluorpolymerschicht abgedeckt, um das Polyamid, das bei höheren Temperaturen hydrolyseanfällig ist, vor dem im beförderten Medium enthaltenen Wasser zu schützen.

Flexible Rohre mehrschichtigen Aufbaus mit unverbundenen Schichten sind beispielsweise aus der WO 2011/128175 und der WO 2011/128197 bekannt. Die hier beschriebenen Rohre enthalten eine innere Auskleidung in Form eines Mehrschichtrohres, wobei die einzelnen Schichten dieses Mehrschichtrohres nicht haftend miteinander verbunden sein müssen. Diese Rohre können auf der Innenseite der inneren Auskleidung eine Armierung enthalten, die üblicherweise als Karkasse bezeichnet wird, um das Zusammenfallen der inneren Auskleidung bei hohem Außendruck zu verhindern.

Insbesondere in den Fällen, in denen das Rohr keine Karkasse enthält, ist es wichtig, dass die einzelnen Schichten der Auskleidung fest aneinander haften. Wenn keine Haftung vorhanden ist, bildet sich während des Betriebs ein gasgefüllter Ringraum zwischen den Schichten. Der Gasdruck nimmt hierbei im Gleichgewicht den Partialdruck des Gases im Fördermedium an. Bei Druckschwankungen in der Leitung kann sich das im Ringraum befindliche Gas ausdehnen; im schlimmsten Fall kann das Gas dabei ein Volumen einnehmen, das zum radialen Zusammenfalten der inneren Schicht der Auskleidung führen kann. Dieses Zusammenfalten führt zu einem Verschließen des Rohrquerschnitts und im schlimmsten Fall dazu, dass kein Medium mehr durchgeleitet werden kann. Dieses, dem Fachmann als Kollabieren bekannte Versagen, ist das dominierende Versagensmuster von Inlinern. Ist das akkumulierte Gasvolumen zwischen den Schichten groß, können die auftretenden Kräfte bei Ausdehnung des Gases durch Druckreduktion im Rohr auch eine innen liegende Karkasse zum Kollabieren bringen. Dies ist als fatales Versagensmuster bei den betreffenden Rohren bekannt.

Eine feste Schichtenhaftung ist jedoch keine hinreichende Voraussetzung, um ein Kollabieren der inneren Auskleidungsschicht zu verhindern. In der Praxis hat sich erwiesen, dass in vielen Fällen, wo zunächst eine feste Anfangshaftung zwischen einer Polyamidschicht und einer Polyolefin- oder Fluorpolymerschicht vorliegt, während des Betriebs die Haftung zunehmend schwächer wird, die Schichten sich schließlich lösen und die innerste Schicht bei einem Absinken des Drucks im Rohr kollabieren kann.

Die Aufgabe der Erfindung bestand darin, ein Rohr mit äußerer Verstärkungsschicht und mehrschichtiger Auskleidung zur Verfügung zu stellen, bei dem eine Polyamidschicht und eine Polyolefinschicht oder Fluorpolymerschicht fest aufeinander haften und bei dem diese feste Haftung während des Betriebs im Wesentlichen erhalten bleibt.

Überraschenderweise wurde gefunden, dass die Haftung während des Betriebs verloren geht, wenn die Formmasse einer der Schichten eine Blendkomponente aus einem anderen Polymer enthält, das in der Formmasse dispergiert ist und somit eine eigene in der Matrix dispers verteilte Phase bildet.

Demgemäß wurde die zugrundeliegende Aufgabe gelöst durch ein Rohr, das folgende Schichten enthält:
a) eine außenliegende Armierungsschicht sowie
b) eine innenliegende Auskleidung, die aus folgenden fest miteinander verbundenen Schichten besteht:
   I. eine Schicht aus einer thermoplastischen Formmasse, die ausgewählt ist aus einer Polyolefinformmasse und einer Fluorpolymerformmasse sowie
   II. eine Schicht aus einer Polyamidformmasse,
wobei entweder die Schichten gemäß b) I. und b) II. direkt aufeinander haften oder die Schichten gemäß b) I. und b) II. über einen Haftvermittler miteinander verbunden sind und wobei die Haftung zwischen den Schichten gemäß b) I. und b) II. mindestens 1,0 N/mm beträgt, ermittelt gemäß DIN 53357 und
wobei sowohl die Polyamidformmasse als auch die Formmasse der Schicht gemäß I. im wesentlichen keine Blendkomponente enthält, die aus einem anderen Polymer besteht und in der Formmasse dispers verteilt ist. Dies bedeutet, dass weniger als 2 Gew.-%, vorzugsweise weniger als 1,5 Gew.-%, besonders bevorzugt weniger als 1 Gew.-%, insbesondere bevorzugt weniger als 0,5 Gew.-% und ganz besonders bevorzugt gar keine derartige Blendkomponente in der Polyamidformmasse enthalten ist.

Derartige Blendkomponenten, die in den betreffenden Formmassen im wesentlichen nicht enthalten sein dürfen, sind beispielsweise Schlagzähmodifikatoren, etwa die sehr häufig eingesetzten polyolefinischen Schlagzähmodifikatoren beispielweise vom EPM-, EPDM- oder SEBS-Typ, Polyolefine wie etwa Polyethylen oder Polypropylen, Fluorpolymere, Acrylnitril-Butadien-Styrol-Polymere (ABS), wobei die genannten Polymere bei Einsatz in einer Polyamidformmasse in der Praxis reaktive funktionelle Gruppen wie beispielsweise Carbonsäureanhydridgruppen enthalten, Acrylatkautschuk oder mit dem Matrixpolyamid unverträgliche andere Polyamidtypen. Diese Polymere sind dem Fachmann wohlbekannt, so dass eine genauere Beschreibung hier unnötig ist. Dies gilt generell auch für andere, hier nicht namentlich aufgeführte Polymere, die in der betreffenden Formmasse dispers verteilt vorliegen würden.

Je nach den Herstellungs- und Verarbeitungsbedingungen würden derartige Blendkomponenten in der Formmasse beispielsweise kugelförmig, ellipsoid, faserförmig oder laminar vorliegen. Die genaue Morphologie spielt keine Rolle; alle derartigen Morphologien sind schädlich und müssen erfindungsgemäß vermieden werden.

Die Morphologie eines Polymerblends lässt sich beispielsweise mittels Rasterelektronenmikroskopie (REM) oder Transmissionselektronenmikroskopie (TEM) auf dem Fachmann bekannte Weise ermitteln. Da aber die allermeisten Polymere miteinander unverträglich sind, ist dies erfindungsgemäß in der Regel nicht nötig. Der Fachmann weiß, dass beispielsweise die oben angeführten Polymere stets dispers im Polyamid, Polyolefin oder Fluorpolymer verteilt werden, wenn ein derartiges Blend hergestellt wird. Die Blendherstellung erfolgt hierbei üblicherweise durch Schmelzemischen.

Blendkomponenten, die in der Formmasse nicht dispergiert werden, sondern sich darin lösen, sind erfindungsgemäß erlaubt. So ist bekannt, dass beispielsweise PA1012 und PA1212 homogen mit PA12 mischbar sind. Der Zusatz derartiger Polyamide zu einer PA12-Formmasse ist daher unkritisch. Gleiches gilt für Polyamidelastomere wie Polyetheresteramide sowie Polyetheramide; diese bestehen aus Polyamidhartblöcken sowie Polyetherweichblöcken. Letztere bilden im Blend eine separate disperse Phase aus, sind aber fest mit den Polyamidhartblöcken verbunden, die bei geeigneter Hartblocklänge in der Polyamidmatrix gelöst sind, sofern das Polyamid der Hartblöcke mit dem Matrixpolyamid identisch oder zumindest mischbar ist. Erfindungsgemäß dürfen also nur solche Blendkomponenten nicht vorhanden sein, die im wesentlichen vollständig dispergiert würden. Dies bedeutet, dass mindestens 85 Volumenprozent dieser Blendkomponente und vorzugsweise mindestens 90 Volumenprozent dieser Blendkomponente in der Polyamidmatrix dispers verteilt sind.

Das erfindungsgemäß verwendbare Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA46, PA6, PA66 oder Copolyamide auf dieser Basis mit Einheiten, die sich von Terephthalsäure und/oder Isophthalsäure herleiten. In einer bevorzugten Ausführungsform enthalten die Monomereinheiten im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Darüber hinaus sind teilaromatische Polyamide gut geeignet, beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als ELASTAMIN^{®}-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt oder können durch Routineversuche ermittelt werden.

In einer möglichen Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Vorzugsweise enthält das eingesetzte Polyamid einen substantiellen Anteil an Aminoendgruppen, wobei besonders bevorzugt mindestens 50 % der Endgruppen aus Aminogruppen besteht. Vorzugsweise besitzt hierbei das Polyamid mindestens 15 mäq/kg Aminogruppen, besonders bevorzugt mindesten 20 mäq/kg, insbesondere bevorzugt mindestens 25 mäq/kg und ganz besonders bevorzugt mindestens 30 mäq/kg, mindestens 35 mäq/kg, mindestens 40 mäq/kg, mindestens 45 mäq/kg beziehungsweise mindestens 50 mäq/kg. Die Obergrenze des Aminogruppengehalts ist durch das Molekulargewicht des Polyamids sowie durch Art und Menge eventuell eingebauter Polyamine festgelegt, die als Verzweiger fungieren können. In der Regel beträgt die Konzentration an Aminogruppen maximal 400 mäq/kg.

Die Polyamidformmasse kann weitere Komponenten enthalten wie beispielsweise Weichmacher, Stabilisatoren, Verarbeitungshilfsmittel, Pigmente, Kettenverlängerer und dergleichen. Der Polyamidanteil beträgt mindestens 60 Gew.-%, bevorzugt mindestens 70 Gew.-%, besonders bevorzugt mindestens 80 Gew.-% und insbesondere bevorzugt mindestens 90 Gew.-%.

Die Polyolefinformmasse der Schicht gemäß b) I. enthält ein Polyolefin, das in erster Linie ein Polyethylen, insbesondere ein Polyethylen hoher Dichte (HDPE), oder ein isotaktisches oder syndiotaktisches Polypropylen sein kann. Das Polyethylen ist vorzugsweise vernetzt, üblicherweise entweder über Umsetzung mit Radikalinitiatoren oder über feuchtigkeitsinitiierte Vernetzung von aufgepfropften Silylgruppen. Das Polypropylen kann ein Homo- oder ein Copolymer sein, beispielsweise mit Ethylen oder 1-Buten als Comonomer. Die Polyolefinformmasse kann die üblichen Hilfs- und Zusatzstoffe enthalten. Der Polyolefinanteil beträgt hierbei mindestens 60 Gew.-%, bevorzugt mindestens 70 Gew.-%, besonders bevorzugt mindestens 80 Gew.-% und insbesondere bevorzugt mindestens 90 Gew.-%.

Um die benötigte Schichtenhaftung zu erzielen, kann das Polyolefin mit polaren Gruppen, beispielsweise Säureanhydridgruppen oder Epoxygruppen, funktionalisiert sein. Die Formmasse kann auch ein Gemisch aus einem funktionalisierten und einem unfunktionalisierten Polyolefin sein. Wird ein vollständig unfunktionalisiertes Polyolefin eingesetzt, so kann die erforderliche Haftung dadurch erzielt werden, dass ein Haftvermittler zwischen der Polyamidschicht und der Polyolefinschicht eingesetzt wird; die Haftvermittlerschicht kann hierbei dünn sein. Geeignete Haftvermittler sind kommerziell erhältlich; es handelt sich üblicherweise um Polyolefine, die mit einer reaktiven Verbindung wie z. B. Maleinsäureanhydrid, Acrylsäure oder Glycidylmethacrylat funktionalisiert sind. Mehrschichtverbunde mit guter Schichtenhaftung aus einer Polyamidschicht, einer Polyolefinschicht, deren Polyolefin gegebenenfalls funktionalisiert ist sowie gegebenenfalls einem Haftvermittler sind dem Fachmann bekannt; beispielweise sei auf die WO 2006/010736 verwiesen.

Das für die Schicht gemäß b) I. verwendete Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein. Diese Polymere sind dem Fachmann bekannt und in einer Vielzahl von Typen handelsüblich. PVDF wird üblicherweise als Homopolymer eingesetzt, jedoch können als PVDF auch Copolymere auf Basis von Vinylidenfluorid eingesetzt werden, die bis zu 40 Gew.-% andere Monomere aufweisen. Als solche anderen Monomere seien beispielhaft genannt: Trifluorethylen, Chlortrifluorethylen, Ethylen, Propen und Hexafluorpropen. Die Fluorpolymerformmasse kann die üblichen Hilfs- und Zusatzstoffe enthalten. Der Anteil an Fluorpolymer beträgt hierbei mindestens 60 Gew.-%, bevorzugt mindestens 70 Gew.-%, besonders bevorzugt mindestens 80 Gew.-% und insbesondere bevorzugt mindestens 90 Gew.-%.

Um die erforderliche Schichtenhaftung zur Polyamidschicht zu erzielen, kann das Fluorpolymer haftungsmodifiziert sein. Hierfür gibt es verschiedene Möglichkeiten. Beispielsweise kann das Fluorpolymer durch radikalische Umsetzung mit einer reaktiven Verbindung wie etwa Maleinsäureanhydrid, Aconitsäureanhydrid, Itaconsäureanhydrid oder Acrylsäure funktionalisiert werden. Eine andere Möglichkeit ist die Verwendung von Radikalstartern, die funktionelle Gruppen wie etwa Carbonatgruppen enthalten, bei der Herstellung des Fluorpolymers; dieses enthält dann eine endständige funktionelle Gruppe (EP 0 992 518 A1). Darüber hinaus kann dem unfunktionalisierten Fluorpolymer, beispielsweise einem PVDF, ein damit verträgliches Polymer zugemischt werden, das funktionelle Gruppen enthält, beispielsweise ein Polyglutarimid bzw. ein Acrylatcopolymer, welches damit an das Polyamid der benachbarten Schicht anbindet (EP 0 637 511 A1). Alternativ hierzu kann die erforderliche Haftung dadurch erzielt werden, dass ein Haftvermittler zwischen der Polyamidschicht und der Fluorpolymerschicht eingesetzt wird; die Haftvermittlerschicht kann hierbei dünn sein. Als Haftvermittler ist beispielsweise ein oben beschriebenes haftungsmodifiziertes Fluorpolymer geeignet.

Die Schichten gemäß b) I. und b) II. sind erfindungsgemäß fest miteinander verbunden. Dies heißt, dass die Haftung zwischen diesen Schichten mindestens 1,0 N/mm, vorzugsweise mindestens 2,0 N/mm und besonders bevorzugt mindestens 3,0 N/mm beträgt. Der Höchstwert der Haftung ist dadurch festgelegt, dass dann kohäsives Versagen vorliegt, das heißt, dass die Trennung innerhalb einer der Schichten stattfindet. Die Haftung wird als Trennkraft durch einen Trennversuch gemäß DIN 53357 an einer Zugprüfmaschine mit einer Prüfgeschwindigkeit von 50 mm/min ermittelt.

Unter "Rohr" wird erfindungsgemäß ein transportierbarer Abschnitt verstanden; dieser kann durchaus auch lang sein, falls das Rohr so flexibel ist, dass es zum Transport aufgerollt werden kann. In der Regel werden mehrere solcher Rohre zu einer Rohrleitung zusammengefügt. Gegenstand der Erfindung ist auch eine Rohrleitung, die ein erfindungsgemäßes Rohr enthält.

In einer ersten Ausführungsform ist die außenliegende Armierungsschicht des Rohrs ein kompaktes Metallrohr. Es besteht vorzugsweise aus Stahl, Edelstahl, Kupfer, Aluminium, Gusseisen, verzinktem Stahl, cadmiertem Stahl, aluminiumbeschichtetem Metall, mit Metalllegierungen wie z. B. GALFAN beschichtetem Stahl oder aus jedem anderen Metall. Besonders bevorzugt besteht die innere Oberfläche des Rohrs aus Stahl, Zink oder einer Legierung mit dem Hauptbestandteil Aluminium, Eisen oder Zink.

Die innenliegende mehrschichtige Auskleidung wird in Form eines Mehrschichtrohres in die Armierung, bestehend aus dem oben beschriebenen kompakten Metallrohr, eingebracht. Generell sind für die Einbringung zwei Varianten möglich.

In der ersten Variante ist der Außendurchmesser des Mehrschichtrohres, hier und im folgenden Inliner genannt, geringfügig größer als der Innendurchmesser der Armierung, in diesem Fall des kompakten Metallrohrs bzw. der Rohrleitung ("close-fit design"). Die Differenz der beiden Durchmesser ist zumindest ein infinitesimal kleiner Betrag. Typischerweise ist der Außendurchmesser des Inliners maximal 25 % und bevorzugt maximal 15 % größer als der Innendurchmesser des Rohrs bzw. der Rohrleitung. Vor dem Einbringen wird der Querschnitt des Inliners in der Regel um mindestens 3 %, bevorzugt um mindestens 5 %, besonders bevorzugt um mindestens 10 %, insbesondere bevorzugt um mindestens 15 % und ganz besonders bevorzugt um mindestens 20 % reduziert. Dies kann beispielsweise durch Verstrecken, Stauchen oder Falten gemäß dem Stand der Technik geschehen.

Geeignete Verfahren zum Einbringen eines Inliners mit Übermaß in ein Rohr oder eine Rohrleitung sind beispielsweise in folgenden Patentanmeldungen beschrieben: EP 0 562 706 A2, EP 0 619 451 A1, WO 95/27168, WO 98/02293, WO 01/16520, EP 0 377 486 A2, EP 0 450 975 A2, EP 0 514 142 A2 und WO 96/37725.

Nach dem Einbringen des Inliners legt sich dieser durch Rückstellung an die Rohrinnenwandung an. Dieser Vorgang kann durch Druck- und Temperaturbeaufschlagung unterstützt werden. Das so ausgekleidete Rohr weist keinen Ringraum auf. Bedingt durch Unregelmäßigkeiten der inneren Rohr- oder Leitungsoberfläche, die beispielsweise durch Oberflächenrauhigkeit, aber auch durch Schweißnähte gegeben sein können, verbleiben gegebenenfalls allerdings Mikrovolumina.

In der zweiten Variante entspricht der Außendurchmesser des Inliners dem Innendurchmesser des kompakten Metallrohrs bzw. der Rohrleitung oder er ist geringfügig kleiner (um etwa 2 bis maximal 10%), so dass der Inliner mit geringen Kräften in die Rohrleitung eingebracht werden kann ("loose fit design"). Falls erforderlich, kann auch hier vor dem Einbringen des Inliners dessen Querschnitt durch Einwirken einer äußeren Kraft verringert werden; diese kann aber deutlich geringer sein als bei der ersten Ausführungsform. Die jeweiligen Rohrgeometrien werden so gewählt, dass sich der polymere Inliner während der Temperatureinwirkung radial thermisch stärker ausdehnt als das Rohr oder die Rohrleitung, hierbei in engen Kontakt kommt und der notwendige Anpressdruck erzeugt wird. Letzteres kann durch Anlegen eines Innendrucks, beispielsweise mittels Druckluft, verstärkt werden. Des Weiteren führt der im Betrieb anliegende Betriebsdruck dafür, dass der Inliner den Kontakt zur Rohrleitung hält.

Nachteilig bei dieser Ausführungsform ist, dass gasförmige Medien durch den Inliner permeieren können. Die zwischen dem Inliner und dem Metallrohr befindlichen Hohlräume und/oder Mikrohohlräume werden dadurch mit Gas gefüllt. Der Gasdruck nimmt im Gleichgewicht den Partialdruck des Gases im Fördermedium an. Bei Druckschwankungen in der Leitung kann sich das in den Hohlräumen befindliche Gas ausdehnen; im schlimmsten Fall kann das Gas dabei ein Volumen einnehmen, das zum radialen Zusammenfalten des Liners führen kann. Dieses Zusammenfalten führt zu einem Verschließen des Trägerrohrquerschnitts und im schlimmsten Fall dazu, dass kein Medium mehr durchgeleitet werden kann. Dieses, dem Fachmann als Kollabieren bekannte Versagen, ist das dominierende Versagensmuster von Inlinern. Daher ist darauf zu achten, dass der verbleibende Hohlraum möglichst minimiert wird. Dies gelingt, indem bevorzugt das close-fit design verwendet wird. Dadurch wird der verbleibende Hohlraum zwischen Inliner und Verstärkungsschicht minimiert. Im idealen Fall wird das verbleibende Volumen so stark reduziert, dass eventuell permeiertes Gas bei Ausdehnung durch Druckschwankungen kein zum Kollabieren des Inliners notwendiges Volumen einnehmen kann.

Des Weiteren kann ein mögliches Kollabieren des Inliners durch Verkleben eliminiert werden. Wird die Armierung des Rohrs bzw. der Rohrleitung auf eine Temperatur oberhalb des Erweichungs- bzw. des Schmelzbereichs des Materials der äußeren Oberfläche des Inliners erhitzt, so schmilzt die Außenoberfläche des Inliners und der Anpressdruck, der entweder durch die Rückverformung, die thermische Ausdehnung des Inliners oder einen von außen aufgebrachten Innendruck erzeugt wird, führt zu einem Einpressen der Schmelze in die Mikrohohlräume zwischen dem Inliner und dem Rohr bzw. der Rohrleitung. Permeierendes Gas kann dann nicht mehr akkumulieren und somit kann bei Druckschwankungen des geförderten Mediums kein Kollabieren des Inliners mehr auftreten. Die Temperierung der Armierung kann hierbei vor, während oder auch nach der Einbringung des Inliners erfolgen.

Nach dem Verkleben wird die Temperatur reduziert. Dabei kann das Rohr beispielsweise auf natürliche Weise, bevorzugt durch eine Luftschleuse und besonders bevorzugt durch eine Wasserkühlung abgekühlt werden.

Nach dem Abkühlen liegt eine bleibende Verkrallung zwischen dem Inlinermaterial und der Armierungsschicht vor sowie zusätzlich gegebenenfalls eine Verklebung. Damit werden zusätzlich auch Relativbewegungen zwischen Inliner und Armierung verhindert.

In einer Ausgestaltung dieses Verfahrens kann auch ein Haftvermittler auf die Innenschicht der Armierung des Rohrs bzw. der Rohrleitung aufgetragen werden, beispielsweise eine Epoxidharzbeschichtung und gegebenenfalls eine weitere Kleberschicht. Die funktionellen Gruppen dieses Haftvermittlers stehen zur chemischen Reaktion mit funktionellen Gruppen des Inlinermaterials bereit. Dies können beispielsweise die Endgruppen eines Polyamids oder auch die Säureanhydridgruppen eines funktionellen Polyolefins sein.

In einer zweiten Ausführungsform ist das Rohr ein sogenanntes "Unbonded Flexible Pipe". Unbonded Flexible Pipes sind als solche Stand der Technik. Derartige Rohre enthalten eine innere Auskleidung in Form eines Kunststoffrohres als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen.

Typische Unbonded Flexible Pipes sind beispielsweise in der WO 01/61232, der US 6 123 114 und der US 6 085 799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe", 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. In der Praxis enthält das Rohr mindestens zwei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen.

Derartige Unbonded Flexible Pipes werden in verschiedenen Ausführungen in Offshore-Anwendungen sowie in verschiedenen Onshore-Anwendungen für den Transport von Flüssigkeiten, Gasen und Aufschlämmungen eingesetzt. Sie können beispielsweise für den Transport von Fluiden dort eingesetzt werden, wo über die Länge des Rohres hinweg ein sehr hoher oder ein sehr unterschiedlicher Wasserdruck existiert, etwa in Form von Steigleitungen, die vom Meeresboden hoch zu einer Einrichtung an oder nahe der Meeresoberfläche verlaufen, ferner generell als Rohre für den Transport von Flüssigkeiten oder Gasen zwischen verschiedenen Einrichtungen, als Rohre, die in großer Tiefe auf dem Meeresboden verlegt sind, oder als Rohre zwischen Einrichtungen nahe der Meeresoberfläche.

In derartigen flexiblen Rohren bestehen die Armierungsschicht oder die Armierungsschichten meistens aus spiralförmig angeordneten Stahldrähten, Stahlprofilen oder Stahlbänden, wobei die einzelnen Schichten mit verschiedenen Windungswinkeln relativ zur Rohrachse ausgebildet sein können. Im Allgemeinen sind mindestens zwei außenliegende Armierungsschichten vorhanden, von denen mindestens eine so aufgebaut ist, dass sie dem Innendruck standhält, und mindestens eine so aufgebaut ist, dass sie Zugkräften standhält.

In einer dritten Ausführungsform besteht die außenliegende Armierungsschicht aus Fasern, beispielsweise aus Glasfasern, etwa in Form von Faserbündeln oder Fasergeweben, und/oder aus Metalldraht, die in eine polymere Matrix eingebettet sind, wobei das Rohr mehrere solcher Armierungsschichten enthalten kann. Diese Armierungsschichten müssen nicht miteinander verbunden sein. Vorzugsweise werden die äußere Oberfläche des Inliners und die innere Oberfläche der anschließend folgenden Armierungsschicht miteinander verschweißt oder verklebt.

In allen diesen Ausführungsformen beträgt der Innendurchmesser der inneren Auskleidung in der Regel mindestens 30 mm, mindestens 40 mm, mindestens 50 mm bzw. mindestens 60 mm sowie maximal 900 mm, maximal 800 mm, maximal 700 mm bzw. maximal 620 mm; in Einzelfällen kann er aber auch darüber oder darunter liegen. Die Gesamtwanddicke der inneren Auskleidung beträgt in der Regel mindestens 2 mm, mindestens 2,5 mm, mindestens 3 mm, mindestens 4 mm bzw. mindestens 5 mm sowie maximal 50 mm, maximal 40 mm, maximal 30 mm, maximal 25 mm, maximal 20 mm bzw. maximal 16 mm; auch sie kann in Einzelfällen darüber oder darunter liegen. Die Dicke der einzelnen Schichten richtet sich nach den anwendungstechnischen Erfordernissen.

In einer möglichen Variante besteht die innere Auskleidung aus einer innenliegenden Fluorpolymerschicht und einer außenliegenden Polyamidschicht, wobei entweder die Formmasse der Fluorpolymerschicht haftungsmodifiziert ist oder die Fluorpolymerschicht und die Polyamidschicht durch eine Haftvermittlerschicht miteinander verbunden sind. Beispielhafte Anwendungen sind Rohölförderleitungen wie Flexible Pipes oder Steel Catenary Risers (SCR), Gasleitungen und Rohöltransport- und -sammelleitungen. Verglichen mit einer inneren Auskleidung, die nur aus einer Polyamidschicht besteht, hat man hier den Vorteil einer erhöhten Temperatur- und Chemikalienbeständigkeit und insbesondere einer verbesserten Hydrolysebeständigkeit. Eine derartige Auskleidung ist kostengünstiger als eine Fluorpolymer-Monolayer-Auskleidung.

In einer anderen möglichen Variante besteht die innere Auskleidung aus einer innenliegenden Polyolefinschicht und einer außenliegenden Polyamidschicht, wobei entweder die Formmasse der Polyolefinschicht haftungsmodifiziert ist oder die Polyolefinschicht und die Polyamidschicht durch eine Haftvermittlerschicht miteinander verbunden sind. Beispielhafte Anwendungen sind die gleichen wie bei der erstgenannten Variante; die Polyolefinschicht wirkt hier primär als Sperrschicht gegen Wasser.

In einer weiteren möglichen Variante besteht die innere Auskleidung aus einer innenliegenden Polyamidschicht und einer außenliegenden Polyolefinschicht, wobei entweder die Formmasse der Polyolefinschicht haftungsmodifiziert ist oder die Polyolefinschicht und die Polyamidschicht durch eine Haftvermittlerschicht miteinander verbunden sind. Beispielhafte Anwendungen sind die gleichen wie bei den vorgenannten Varianten. Vorteile liegen insbesondere in der Verringerung der Quellung der Polyolefinschicht und damit in einer möglichen Erhöhung der Betriebstemperatur; zudem besteht ein Kostenvorteil gegenüber einer Polyamid-Monolayer-Auskleidung.

Die erfindungsgemäßen Rohre beziehungsweise Rohrleitungen weisen eine verbesserte Betriebssicherheit und erhöhte Langlebigkeit auf.

Die Erfindung wird nachfolgend beispielhaft erläutert.

In den Beispielen wurden folgende Formmassen eingesetzt:
**PA12 ohne Modifizierung:** Ein PA12-Extrusionstyp der relativen Viskosität ηᵣₑₗ von 2,21, gemessen in m-Kresol gemäß DIN EN ISO 307, sowie mit 55 mäq/kg Aminoendgruppen und 10 mäq/kg Carboxylendgruppen. Die Formmasse enthielt zusätzlich Standardstabilisatoren.
**Schlagzähmodifizierte PA12-Formmasse:** Enthielt neben dem ebengenannten PA12-Typ und den Standardstabilisatoren zusätzlich 5 Gew.-% Exxelor^{®} VA1803, einen mit Maleinsäureanhydrid funktionalisierten Ethylen-Propylen-Kautschuk.
**Haftendes PVDF:** Blend aus 94,5 Gew.-% PVDF und 5,5 Gew.-% Polyglutarimid entsprechend EP 0 637 511 A1. Das Polyglutarimid bildet zusammen mit dem amorphen Anteil des PVDF im Wesentlichen eine amorphe Mischphase aus.

Die Rohre wurden durch Coextrusion bei Kopf- und Düsentemperaturen von 260 °C und einer Abzugsgeschwindigkeit von 2 m/min hergestellt. Sie wurden danach in Stücke geschnitten, um Prüfkörper zu erhalten.

Die Prüfkörper wurden in einem Hochdruckautoklaven vier Zyklen von Kompression und Dekompression unterworfen, wobei folgende Parameter Verwendung fanden:
- Erste Sättigungsperiode 24 h; Druck 450 bar
- Zyklusperiode: mindestens 24 h
- Dekompressionsrate etwa 120 bis 140 bar/min
- Temperatur 90 °C
- Lagerzeit zwischen zwei Zyklen: 1 h
- Gas: CO₂ (überkritisch, mit Wasser gesättigt)

Die Ergebnisse sind in der Tabelle 1 wiedergegeben.

**Tabelle 1: Beispiel 1 sowie Vergleichsbeispiel 1**

| Rohrdimension 32 x 3 mm | | Schichtenhaftung in N/mm (Trennversuch nach DIN 53 357) | | | | | |
|---|---|---|---|---|---|---|---|
| | | längs zur Extrusionsrichtung | | | | über den Umfang | |
| | | **unbehandelt** | | **nach 4 Zyklen RGD-Test bei 90 °C / 450 bar / CO2** | | | |
| Rohr-Außenschicht 1 mm dick | Rohr-Innenschicht 2 mm dick | minimal | Mittelwert | minimal | Mittelwert | minimal | Mittelwert |
| PA12 ohne Modifizierung **(Beispiel 1)** | haftendes PVDF | 4,5 | 5,8 | 13,6 | 14,7 | 11,2 | 19,2 |
| Schlagzähmodifizierte PA12-Formmasse **(Vergleichsbeispiel 1)** | haftendes PVDF | 8,1 | 8,4 | 0,6 | 3,2 | 1,4 | 5,1 |

## Patentansprüche

1. Rohr, das folgende Schichten enthält:
a) eine außenliegende Armierungsschicht sowie
b) eine innenliegende Auskleidung, die aus folgenden miteinander fest verbundenen Schichten besteht:
I. Eine Schicht aus einer thermoplastischen Formmasse, die ausgewählt ist aus einer Polyolefinformmasse und einer Fluorpolymerformmasse sowie
II. eine Schicht aus einer Polyamidformmasse,
wobei entweder die Schichten gemäß b) I. und b) II. direkt aufeinander haften oder die Schichten gemäß b) I. und b) II. über einen Haftvermittler miteinander verbunden sind und wobei die Haftung zwischen den Schichten gemäß b) I. und b) II. mindestens 1,0 N/mm beträgt, ermittelt gemäß DIN 53357,
**dadurch gekennzeichnet, dass** sowohl die Polyamidformmasse als auch die Formmasse der Schicht gemäß I. im wesentlichen keine Blendkomponente enthält, die aus einem anderen Polymer besteht und in der Formmasse dispers verteilt ist.

2. Rohr gemäß Anspruch 1,
**dadurch gekennzeichnet,**
**dass** die außenliegende Armierungsschicht ein Metallrohr ist.

3. Rohr gemäß Anspruch 2,
**dadurch gekennzeichnet,**
**dass** die Auskleidung mit dem Metallrohr verklebt ist.

4. Rohr gemäß Anspruch 1,
**dadurch gekennzeichnet,**
**dass** es ein Unbonded Flexible Pipe ist, bei dem die außenliegende Armierungsschicht aus spiralförmig angeordneten Stahldrähten, Stahlprofilen oder Stahlbändern besteht.

5. Rohr gemäß Anspruch 4,
**dadurch gekennzeichnet,**
**dass** mindestens zwei außenliegende Armierungsschichten enthalten sind, von denen mindestens eine so aufgebaut ist, dass sie dem Innendruck standhält, und mindestens eine so aufgebaut ist, dass sie Zugkräften standhält.

6. Rohr gemäß einem der Ansprüche 4 und 5,
**dadurch gekennzeichnet,**
**dass** es zusätzlich eine äußere Umhüllung in Form eines Rohres oder Schlauches aus einer thermoplastischen Formmasse oder einem Elastomer enthält.

7. Rohr gemäß Anspruch 1,
**dadurch gekennzeichnet,**
**dass** die außenliegende Armierungsschicht aus Fasern und/oder Draht besteht, die in eine polymere Matrix eingebettet sind, wobei das Rohr mehrere derartige Armierungsschichten enthalten kann.

8. Rohr gemäß Anspruch 7,
**dadurch gekennzeichnet,**
**dass** die äußere Oberfläche der inneren Auskleidung mit der inneren Oberfläche der Armierung verschweißt oder verklebt ist.

9. Rohr gemäß einem der vorhergehenden Ansprüche,
**dadurch gekennzeichnet,**
**dass** die innere Auskleidung aus einer innenliegenden Fluorpolymerschicht und einer außenliegenden Polyamidschicht besteht, wobei entweder die Formmasse der Fluorpolymerschicht haftungsmodifiziert ist oder die Fluorpolymerschicht und die Polyamidschicht durch eine Haftvermittlerschicht miteinander verbunden sind.

10. Rohr gemäß einem der Ansprüche 1 bis 8,
**dadurch gekennzeichnet,**
**dass** die innere Auskleidung aus einer innenliegenden Polyolefinschicht und einer außenliegenden Polyamidschicht besteht, wobei entweder die Formmasse der Polyolefinschicht haftungsmodifiziert ist oder die Polyolefinschicht und die Polyamidschicht durch eine Haftvermittlerschicht miteinander verbunden sind.

11. Rohr gemäß einem der Ansprüche 1 bis 8,
**dadurch gekennzeichnet,**
**dass** die innere Auskleidung aus einer innenliegenden Polyamidschicht und einer außenliegenden Polyolefinschicht besteht, wobei entweder die Formmasse der Polyolefinschicht haftungsmodifiziert ist oder die Polyolefinschicht und die Polyamidschicht durch eine Haftvermittlerschicht miteinander verbunden sind.

12. Rohr gemäß einem der vorhergehenden Ansprüche,
**dadurch gekennzeichnet,**
**dass** das Polyamid der Polyamidformmasse mindestens 15 mäq/kg Aminogruppen besitzt.

13. Rohrleitung, die ein Rohr gemäß einem der vorhergehenden Ansprüche enthält.

14. Rohrleitung gemäß Anspruch 13, die eine Förderleitung, eine Sammelleitung oder eine Transportleitung für Rohöl oder Erdgas ist.

15. Rohrleitung gemäß Anspruch 13, die eine Leitung für überkritisches CO₂ ist.

## Claims

1. Pipe, which comprises the following layers:
a) an external reinforcement layer and
b) an internal liner which consists of the following layers securely bonded to one another:
I. a layer made of a thermoplastic moulding composition selected from a polyolefin moulding composition and a fluoropolymer moulding composition and
II. a layer made of a polyamide moulding composition,
where either the layers according to b) I. and b) II. adhere directly to one another or the layers according to b) I. and b) II. have been bonded to one another by way of an adhesion promoter and where the adhesion between the layers according to b) I. and b) II. is at least 1.0 N/mm, determined according to DIN 53357,
**characterized in that** not only the polyamide moulding composition but also the moulding composition of the layer according to I. in essence comprises no blend component which is composed of another polymer and which has disperse distribution in the moulding composition.

2. Pipe according to Claim 1,
**characterized in that**,
the external reinforcement layer is a metal pipe.

3. Pipe according to Claim 2,
**characterized in that**,
the liner has been adhesive-bonded to the metal pipe.

4. Pipe according to Claim 1,
**characterized in that**,
it is an unbonded flexible pipe in which the external reinforcement layer is composed of helically arranged steel wires, steel profiles or steel tapes.

5. Pipe according to Claim 4,
**characterized in that**,
at least two external reinforcement layers are present, the structure of at least one of these being such that it withstands the internal pressure, and the structure of at least one of these being such that it withstands tensile forces.

6. Pipe according to Claim 4 or 5,
**characterized in that**,
it also comprises exterior sheathing in the form of a pipe or hose made of a thermoplastic moulding composition or of an elastomer.

7. Pipe according to Claim 1,
**characterized in that**,
the external reinforcement layer is composed of fibres and/or wire, where these have been embedded into a polymeric matrix, where the pipe can comprise a plurality of such reinforcement layers.

8. Pipe according to Claim 7,
**characterized in that**,
the exterior surface of the inner liner has been adhesive-bonded or welded to the inner surface of the reinforcement.

9. Pipe according to any of the preceding claims,
**characterized in that**,
the inner liner consists of an internal fluoropolymer layer and an external polyamide layer, where either the moulding composition of the fluoropolymer layer has been adhesion-modified or the fluoropolymer layer and the polyamide layer have been bonded to one another via an adhesion-promoter layer.

10. Pipe according to any of Claims 1 to 8,
**characterized in that**,
the inner liner consists of an internal polyolefin layer and an external polyamide layer, where either the moulding composition of the polyolefin layer has been adhesion-modified or the polyolefin layer and the polyamide layer have been bonded to one another via an adhesion-promoter layer.

11. Pipe according to any of Claims 1 to 8,
**characterized in that**,
the inner liner consists of an internal polyamide layer and an external polyolefin layer, where either the moulding composition of the polyolefin layer has been adhesion-modified or the polyolefin layer and the polyamide layer have been bonded to one another via an adhesion-promoter layer.

12. Pipe according to any of the preceding claims,
**characterized in that**,
the polyamide of the polyamide moulding composition has at least 15 meq/kg of amino groups.

13. Pipeline which comprises a pipe according to any of the preceding claims.

14. Pipeline according to Claim 13, which is a conveying pipeline, a collection pipeline or a transport pipeline for crude oil or natural gas.

15. Pipeline according to Claim 13, which is a pipeline for supercritical CO₂.

## Revendications

1. Tube, lequel est constitué des couches suivantes :
a) une couche de renforcement qui est située à l'extérieur ; ainsi que
b) un revêtement qui est situé à l'intérieur et qui est composé des couches suivantes, lesquelles sont reliées de manière rigide les unes aux autres :
I. une couche constituée d'une pâte de moulage en thermoplastique, laquelle est sélectionnée à partir d'une pâte de moulage en polyoléfine et d'une pâte de moulage en fluoropolymère ; ainsi que
II. une couche constituée d'une pâte de moulage en polyamide,
selon lequel soit les couches conformément à b) I. et b) II. adhèrent directement les unes aux autres, soit les couches conformément à b) I. et b) II. sont reliées les unes aux autres par l'intermédiaire d'un agent d'adhérence ; et
selon lequel l'adhérence entre les couches conformément à b) I. et b) II. s'élève à au moins 1,0 N/mm, déterminée conformément à la norme DIN 53357,
**caractérisé en ce que** aussi bien la pâte de moulage en polyamide que la pâte de moulage de la couche conformément à I. ne contient, pour l'essentiel, aucun composant de mélange qui est composé d'un autre polymère et qui est réparti de manière dispersée dans la pâte de moulage.

2. Tube selon la revendication 1,
**caractérisé en ce que**
la couche de renforcement qui est située à l'extérieur est un tube de métal.

3. Tube selon la revendication 2,
**caractérisé en ce que**
le revêtement est encollé avec le tube de métal.

4. Tube selon la revendication 1,
**caractérisé en ce que**
le tube en question est un tuyau flexible non collé (Unbonded Flexible Pipe), selon lequel la couche de renforcement qui est située à l'extérieur est composée de fils en acier, de profilés en acier ou de bandes en acier, lesquel(le)s sont disposé(e)s en forme de spirale.

5. Tube selon la revendication 4,
**caractérisé en ce que**
au moins deux couches de renforcement qui sont situées à l'extérieur sont incluses, parmi lesquelles au moins une de ces couches est structurée de telle sorte qu'elle est capable de résister à la pression interne, et parmi lesquelles au moins une de ces couches est structurée de telle sorte qu'elle est capable de résister aux forces de traction.

6. Tube selon l'une des revendications 4 et 5,
**caractérisé en ce que**
le tube proprement dit est constitué en outre d'une enveloppe externe qui se présente sous la forme d'un tube ou d'un tuyau, lequel est constitué d'une pâte de moulage en thermoplastique ou d'un élastomère.

7. Tube selon la revendication 1,
**caractérisé en ce que**
la couche de renforcement qui est située à l'extérieur est composée de fibres et/ou fils qui sont incorporé(e)s dans une matrice polymère, selon lequel le tube peut inclure plusieurs couches de renforcement de ce type.

8. Tube selon la revendication 7,
**caractérisé en ce que**
la surface externe du revêtement interne est soudée ou encollée avec la surface interne du renforcement.

9. Tube selon l'une des revendications précédentes,
**caractérisé en ce que**
le revêtement interne est constitué d'une couche de fluoropolymère qui est située à l'intérieur et d'une couche de polyamide qui est située à l'extérieur, selon lequel soit la pâte de moulage de la couche de fluoropolymère est modifiée sur le plan de l'adhérence, soit la couche de fluoropolymère et la couche de polyamide sont reliées l'une à l'autre par l'intermédiaire d'une couche d'un agent adhésif.

10. Tube selon l'une des revendications 1 à 8,
**caractérisé en ce que**
le revêtement interne est constitué d'une couche de polyoléfine qui est située à l'intérieur et d'une couche de polyamide qui est située à l'extérieur, selon lequel soit la pâte de moulage de la couche de polyoléfine est modifiée sur le plan de l'adhérence, soit la couche de polyoléfine et la couche de polyamide sont reliées l'une à l'autre par l'intermédiaire d'une couche d'un agent adhésif.

11. Tube selon l'une des revendications 1 à 8,
**caractérisé en ce que**
le revêtement interne est constitué d'une couche de polyamide qui est située à l'intérieur et d'une couche de polyoléfine qui est située à l'extérieur, selon lequel soit la pâte de moulage de la couche de polyoléfine est modifiée sur le plan de l'adhérence, soit la couche de polyoléfine et la couche de polyamide sont reliées l'une à l'autre par l'intermédiaire d'une couche d'un agent adhésif.

12. Tube selon l'une des revendications précédentes,
**caractérisé en ce que**
le polyamide de la pâte de moulage en polyamide possède au moins 15 éq./kg de groupes amino.

13. Tuyauterie, laquelle est constituée d'un tube selon l'une des revendications précédentes.

14. Tuyauterie selon la revendication 13, laquelle est un tubage de production, un tuyau collecteur ou une conduite de transport pour le pétrole brut ou pour le gaz naturel.

15. Tuyauterie selon la revendication 13, laquelle est une conduite pour du CO₂ supercritique.
